Europäisches Patentamt

European Patent Office

Office européen des brevets

(19)

(11) Publication number: **0 012 990**
B1

(12) **EUROPEAN PATENT SPECIFICATION**

(45) Date of publication of patent specification: **03.11.82**

(51) Int. Cl.³: **C 08 L 27/06, C 08 K 5/20, C 08 K 3/34**

(21) Application number: **79105260.8**

(22) Date of filing: **18.12.79**

(54) Talc containing moulding compositions on the basis of vinyl chloride polymers.

(30) Priority: **19.12.78 JP 158015/78**
**21.12.78 JP 159065/78**

(43) Date of publication of application:
**09.07.80 Bulletin 80/14**

(45) Publication of the grant of the patent:
**03.11.82 Bulletin 82/44**

(84) Designated Contracting States:
**BE DE FR GB IT NL**

(56) References cited:
**US - A - 3 390 800**
**US - A - 3 400 094**

**DERWENT PUBLICATIONS, week B40, issued
14th November 1979, Section A, page 6,
abstract no. 72601B/40 London, G.B.
KANEGAFUCHI**

The file contains technical information submitted after the application was filed and not included in this specification

(73) Proprietor: **KANEGAFUCHI KAGAKU KOGYO
KABUSHIKI KAISHA
2-4 Nakanoshima 3-chome
Kita-ku Osaka (JP)**

(72) Inventor: **Tawada, Yoshihisa
7-7, 2-chome, Noda
Takatsuki-shi, Osaka-fu (JP)**
Inventor: **Ushioda, Minoru
6-12, 3-chome, Mukonoso
Amagasaki-shi, Hyogo-ken (JP)**
Inventor: **Yamamoto, Tetsuro
96-1, Takigahira Shioya-cho, Tarumi-ku
Kobe-shi, Hyogo-ken (JP)**
Inventor: **Hatano, Itaru
8-3, 3-chome, Motoyamanaka-machi
Higashinada-ku, Kobe-shi Hyogo-ken (JP)**

(74) Representative: **Vossius-Vossius-Tauchner-
Heunemann-Rauh Patentanwälte
P.O.Box 860767 Siebertstrasse 4
D-8000 München 86 (DE)**

Courier Press, Leamington Spa, England.

# Talc containing moulding compositions on the basis of vinyl chloride polymers

This invention pertains to moulding compositions on the basis of vinyl chloride, polymers which are reinforced with talc of less than a certain particle size. From US-patents 3 390 800 and 3 400 094 plasticized vinyl resin sealing compositions are known comprising essentially a vinyl chloride polymer, certain fatty acid amides and optionally a filler, such as talc.

Recently studies have been undertaken to impart sufficient mechanical strength or thermal resistance to thermoplastic resins by compounding them with inorganic fillers, and some of the resins have already been put into practical use thanks to such a process. As for polyvinyl chloride, fiber-glass is used as a reinforcing material. Of course, other reinforcing materials such as asbestos or needle-like calcium silicate (wollastonite) are known as fillers for this purpose. These fibrous fillers, however, although they are able to improve the tensile strength of the matrix unidirectionally along their orientation, lower it considerably in the transverse direction; in other words they give rise to anisotropy of the physical properties of the reinforced plastics. Moreover, these fillers seriously impair the impact strength of polyvinyl chloride. Mica is also known as a reinforcing material for polymers, which causes anisotropy of the physical properties of polymer compositions; however, when mica having a high ratio of length to thickness is blended with polyvinyl chloride, the impact strength of this polymer, as well as the tensile strength, tends to be greatly reduced. This may result from the fact that shearing stresses to disperse the mica in polyvinyl chloride incidentally break the lamellar crystals of the mica and lower the tensile strength of the polymer. In this case a part of the mica, crystals of which are left unbroken, further deteriorates the impact strength, besides, talc tends to cause the polymer to degrade upon heating and causes darkening during moulding, which also results in impairment of the impact strength.

It is generally known that the addition of inorganic fillers accelerates the degradation of polyvinyl chloride. Presumably the reason for this is that iron ions present accelerate the dehydrochlorination of polyvinyl chloride. Asbestos-polyvinyl chloride moulding compositions, widely used in the form of tiles, have been studied with a view to improving their thermal stability. According to the Handbook of the Additives for Plastics and Rubbers (published by Kagaku Kogyo-sha, 1970), dicyandiamides and melamine have an excellent effect in increasing the thermal stability of polyvinyl chloride. In reality, however, when only one part of a dicyandiamide is added to 100 parts of a talc-polyvinyl chloride composition, the thermal stability decreases; likewise, the addition of one part of melamine has almost no effect in improving thermal stability. Furthermore, a stabilizer such as tribasic lead sulfate or butyl tin maleate does not bring about a favourable effect on the thermal stability.

The present inventors have made intensive studies to improve the impact strength and the thermal stability during processing of talc-polyvinyl chloride moulding compositions and have found that the impact strength, tensile strength and bending strength can be improved by reinforcing polyvinyl chloride with talc wherein at least 85 percent, and preferably at least 90 percent, of the talc has a particle size of not more than 10 $\mu$m and that the thermal stability can be still further improved by blending in an amide compound and/or a polyamide having a softening point or melting point not higher than 200°C. The amount of the polyamide and/or amide compound is from 0.1 to 30 parts by weight per 100 parts by weight of the talc used.

The compositions of the present invention may contain other conventional additives, such as processing aids, stabilizers, colouring agents and pigments.

Preferred embodiments of this invention are explained in detail as follows.

The talc employed in this invention is a mineral of the monoclinic system, the chemical formula of which is $Mg_2$ $(Si_4O_{10})$ $(OH)_2$, and is ground for use. For grinding, jaw crushers, hammer crushers or impact mills can generally be used, though in the case of the talc of this invention a crusher-like impact mill is more suitable. Examples of the crushers of this type are the Supermicron® Mill (manufactured by Hosokawa Iron Works), the Mikro® Atomizer, the Raymond Vertical Mill, and the Ultracontraplex® Mill.

When talc from China is ground by a Supermicron® Mill, the talc powder can be obtained in the following particle size distribution: 10 $\mu$m and below, 74.7%; 5 $\mu$m and below, 59.7%. Polyvinyl chloride (DP 1000, lead-compounded) is mixed with this powdered talc to make pellets which are then formed into a belt 3 mm thick × 60 mm wide, whose tensile strength and impact strength are measured by means of a DuPont Impact Tester (with a 9.52 mm striker) along both the machine direction (MD) and the transverse direction (TD). The impact strength, reduced to 300 g, is indicated as height (cm) when half the specimens are broken. When the amount of the talc present is between 5 and 30 percent by weight, the talc-blended polyvinyl chloride has almost the same tensile strength as pure polyvinyl chloride and the isotropy of the mechanical properties is low, whereas the DuPont impact strength becomes greatly reduced in the talc-blended polyvinyl chloride by comparison with the pure one. The talc to be used according to this invention, specified to include 85 percent or more, and preferably 90 percent or more, particles of at most 10 $\mu$m is one which will prove to have at most 10 percent of particles of 10 $\mu$m and above when quantified by a particle distribution measuring apparatus using centrifugal sedimentation.

As for the method for grinding or crushing the talc to a particle size below 10 $\mu$m, a crusher of the impact mill type and a classifier of the Archimedes spiral air type are used in tandem. Mikroplex® (RT)

**0 012 990**

by Alpine Co., Ltd. is known as a classifier of this type. During operation of the classifier, fine adjustment of the blades angle is required, and once the blades have been set it is necessary to repeat the classifying operation. Apart from this, a zig-zag type classifier in which classifying chamber walls rotate (manufactured by Alpine Co., Ltd.) may also be used. In some cases an easily crushable talc will suffice for the purpose without the need for a classifier, and sometimes only a cyclone need be used to remove coarser particles.

If necessary, the talc may be treated with a silane coupling agent, an organic titanate or a fatty acid.

The amount of talc to be blended with the polyvinyl chloride is not particularly limited; however, it is preferably used in an amount of from 5 to 40 percent by weight of the composition.

The vinyl chloride polymer as specified in this invention is a homopolymer, a copolymer or a modified polymer of vinyl chloride, being composed predominantly of polyvinyl chloride, and thus it contains polyvinyl chloride, polyvinylidene chloride, a copolymer of vinyl chloride and vinylidene chloride, vinyl chloride and vinyl acetate, vinyl chloride and maleic acid anhydride, vinyl chloride and ethylene, or vinyl chloride and propylene, and a modified resin such as chlorinated polyvinyl chloride. These polymers may be used singly or in combination. Moreover, resins such as ABS, MBS and chlorinated polyethylene which have been used to improve the impact strength may be added according to the circumstances. In these cases the polyvinyl chloride content is not less than 40 percent by weight of the total amount of the composition. In addition, as additives stabilizers containing lead, tin or Ca-Zn, lubricants and processing aids may be added if necessary. Occasionally combinations of other fillers such as claicum carbonate, gypsum, gypsum fibers, asbestos, mica, calcium silicate or fiber-glass may be used.

The polyamide specified in this invention has a softening or a melting point of 200°C or less and comprises linear polymers with —CONH— units. The softening point is determined by the falling ball method according to ASTM E—28—58T. The melting point is determined according to the DSC (differential scanning calorimetry) method, where the main peak is taken to show the melting point. Typical pure polyamides such as nylon 6, nylon 6,6, nylon 11, and nylon 12 are not suitable in the present invention because they are highly crystalline and have softening points above 200°C. In order to lower the softening or melting point of such polyamides it is necessary to lower the crystallization. Among the polymers whose crystallinity is lowered are copolymers built up from polymer components, such as nylon 6, nylon, 6,6, nylon 6,10 and nylon 12, nylons modified through alkoxy methylation, such as methoxy methylated nylon 6, methoxy methylated nylon 6,6, and some particular kinds of polyamides which can be produced by polymerizing ethylene diamine and the dimer synthesized from unsaturated aliphatic acids. In addition to these polymers some polyamides modified with unsaturated aliphatic acids or phenols may be used.

It should, however, be noted that free amines or stabilizers for polyamides are sometimes ineffective or even harmful for the thermal stability of the polyvinyl chloride.

The polyamide may be blended in any of the following ways: adding the polyamide to monomeric vinyl chloride at the start of polymerization, adding the polyamide to the talc-containing vinyl chloride polymer, or adding to the vinyl chloride polymer the mixture of talc and polyamide blended under heating. If a polyamide of the solvent-soluble type is used, the surface of the talc particle may be treated beforehand. The proportion of polyamide to talc is approximately from 0.1 to 25 percent by weight; in other words when the proportion is above 25 or below 0.1 percent by weight, the effect on the thermal stability is insufficient.

The amount of talc is not particularly limited in this invention. In general even small amounts of conventional talc deteriorate the thermal stability of polyvinyl chloride; however, the talc to be used according to this invention very much improves the thermal stability of the polyvinyl chloride. When the talc is used in a large quantity, a correspondingly greater effect can be expected. However, when the quantity of talc exceeds 40 percent by weight, moulding of the polyvinyl chloride compositions becomes difficult and the physical properties tend to deteriorate. Therefore it is recommended that the talc be used in an amount of not more than 40 percent by weight, based on the total weight of the composition according to the present invention.

To obtain products with high impact strength it is necessary that the talc contain at least 85 percent by weight particles of at most 10 $\mu$m. Talc-containing polyvinyl chloride is generally liable to cause deterioration of the thermal stability; the impact strength too decreases in proportion to prolongation of the talc-blending time. By contrast, in this invention the addition of the polyamide minimizes undesirable results and brings out the favourable effect of the talc.

The amide compounds to be used according to this invention, are aliphatic amides of the general formula $R^1CONHR^2$, where $R^1$ is an aliphatic hydrocarbon residue containing 10 to 40 carbon atoms and $R^2$ is a methylol group or a group of the general formula $(CH_2)_nNHCOR^3$, where n is an integer between from 1 to 10 and $R^3$ an aliphatic hydrocarbon residue containing from 10 to 40 carbon atoms. When the amide compound of the general formula $R^1CONHR^2$ is added to the polyvinyl chloride containing the talc, the decrease in impact strength is greatly minimized. When the talc is blended with the polyvinyl chloride the dispersion tends to improve as the blending time increases; on the other hand, the impact strength, as well as the thermal stability, is reduced. In addition yet another problem

3

**0 012 990**

generally arises. The impact strength falls far more when a large mixer is used to blend the talc than when a small one is used. More specifically, when a 100-litre mixer is used for blending, the impact strength of the polyvinyl chloride compound proves to be approximately two-thirds that resulting when a 20-litre mixer is used over the same period of time. This seems to be caused by heat generated as a result of friction between the blades of the agitator and the inner surface of the mixer; in short, the larger the mixer, the greater the peripheral speed of the blade, thus giving rise to much more heat and deterioration of the polymer's properties. The same result will be obtained when the blending time is prolonged. The amide compounds to be used according to the present invention bring about an excellent effect in preventing such deterioration of the thermal stability. The amount of the amide should be determined so that the total lubricity of the polyvinyl chloride composition is exactly suited to the mixer to be used, for the amide is a weak lubricant. Generally speaking, the preferred amount of amide is 0.5 to 20 parts by weight, and preferably not more than 10 parts by weight per 100 parts by weight of the talc. In the case of alkylene bis-aliphatic amides, these substances may be used singly for, as is evident from the plastograph measurement, the thermal stability proves to be much improved. In the case of methylolated aliphatic amides the thermal stability is not so much improved. In this case the methylolated amides are preferably used according to the present invention in combination with an amide and/or a polyamide. Naturally, both the polyamides and the alkylene bis-aliphatic amides can be applied together. The amide may be mixed with other components according to any of the following methods: the amide may be mixed at the start of the polyvinyl chloride polymerization, it may be mixed into the mixture of the talc and the polyvinyl chloride, or else it may be added to the talc while heating before making up the polyvinyl chloride moulding composition.

The talc for use is required to contain at least 85 percent by weight of particles of a particle size of at most 10 $\mu$m. The impact strength is very much influenced by the particle size distribution below 10 $\mu$m so that the talc complying with this invention best displays the desired effect. The method of mixing the talc, the polyamide or the amide with the polyvinyl chloride is not critical, yet it is desirable that the talc be previously well dispersed in the polyvinyl chloride. To ensure good dispersion of the talc, preliminary mixing using a Banbury mixer or high-speed mixing for about 20 minutes (this may be varied according to the type of mixer used) is preferred. In moulding the polyvinyl chloride composition, an extruder of the double roll type, uniaxial type, biaxial type or special complex type can be used without the need for modification. Otherwise, a double roll, uniaxial, biaxial, special complex type extruder, or a Banbury mixer may first be used for pelletization, than an injection, blowing, extrusion or calender moulding apparatus may be used for the moulding operation.

Talc has not generally been incorporated into polyvinyl chloride; it has previously usually been blended with polystyrene or polyolefins. One of the reasons for this is that the impact strength is very much decreased when talc is added. Since talc has a lamellar crystal form different from other fillers such as calcium carbonate, it has been considered that the stress concentrates at the crystal edges, which causes a decrease in the impact strength of the matrix. Considering that this invention has improved the impact strength of the polyvinyl chloride composition by a quite simple method such as using a talc having a particular particle distribution, the industrial applicability of this invention will be great.

Moreover, this invention has made it possible to improve the thermal stability by adding an amide compound which is substantially neither a stabilizer nor a lubricant. This achievement, coupled with the synergistic effect of the amide and the talc, is surprising, and the industrial advantages which it brings will be highly appreciated.

Thirdly, by incorporating the amide a decrease in the impact strength of the polyvinyl chloride composition is prevented, such as formerly occurred in the polymer when the talc was mixed with the polymer and the other additives such as stabilizer or lubricant.

The present invention will be explained more fully in the following examples.

Example 1

When the talc from China is crushed by means of a Supermicron® mill, 74.7% of powdery talc having a particle size of 10 $\mu$m or less and 59.7% of powdery talc having a particle size of 5 $\mu$m or less was obtained. From this talc, passed through a 325 mesh (JIS) sieve, the following talc specimens were prepared using a Mikroplex® classifier (manufactured by Alpine Co., Ltd. and Yasukawa Electric Mfg. Co., Ltd.):

(1) 10 $\mu$m = : 85.7%, 5 $\mu$m = : 66.9%

(2) 10 $\mu$m = : 90.4%, 5 $\mu$m = : 81.1%

(3) 10 $\mu$m = : 95.2%, 5 $\mu$m = : 88.3%

A mixture of polyvinyl chloride (trade name: Kanevinyl® S—1001, product, of Kanegafuchi Chemical Industry Co., Ltd.) with lead compounds was prepared according to examples 2 to 9. To this mixture the talc specimens are added in an amount of 5, 10, 20 and 30 percent by weight respectively.

4

**0012990**

After blending at less than 80°C for 20 minutes using a Supermixer, these blends were pelletized at 180°C using a 40 mm φ extruder (manufactured by Tabata Co., Ltd., Type: HV—40—28, Dullmage screw CR = 3.2, 2.2), then shaped into a belt 3 mm thick × 60 mm wide using the same extruder.

The measurement of the tensile strength in the machine direction (MD) was carried out at a constant speed of 10 mm/min. using No. 1 test piece of JIS K—7113. The tensile strength in the transverse direction (TD) was also measured at a constant speed of 5 mm/min. using No. 3 test piece of JIS K—7113. The impact strength was measured with a DuPont Impact Tester with a 9.52 mm striker and the result, reduced to 300 g, was indicated as height (cm) when half of the specimens were broken. The measurements were all carried out at 23°C. Table 2 shows the results.

None of the talc specimens lowered the tensile strength; the anisotropy of the mechanical properties proved to be small, yet in the case of talc (1) the impact strength and the tensile strength in the MD were very much improved. Moreover, talc (2) proves to be effective in improving the impact strength of the polyvinyl chloride composition to a point approximately as high as that of pure polyvinyl chloride. The particle size distribution of each talc specimen was measured with a Shimazu particle size distribution measuring apparatus of the centrifugal sedimentation type CF—50. The solvent used was water (with 0.2% $(NaPO_3)_6$ as a dispersing agent); the dispersion temperature was 29°C. The particle size distribution of each talc specimen is detailed in Table 1. The particle size determined by this measurement is defined as "Stoke's diameter".

TABLE 1

| | $10\ \mu m \geq$ 74.7 % (original) | $10\ \mu m \geq$ 85.7 % (talc 1) | $10\ \mu m \geq$ 90.4 % (talc 2) | $10\ \mu m \geq$ 95.2 % (talc 3) |
|---|---|---|---|---|
| $10\ \mu m \leq$ | 25.3 | 14.3 | 9.6 | 4.8 |
| $10 - 8\ \mu m$ | 5.3 | 5.6 | 3.6 | 3.1 |
| $8 - 6\ \mu m$ | 6.2 | 8.7 | 3.9 | 2.1 |
| $6 - 5\ \mu m$ | 3.5 | 4.5 | 1.8 | 1.7 |
| $5 - 4\ \mu m$ | 5.4 | 6.8 | 3.6 | 3.0 |
| $4 - 3\ \mu m$ | 6.4 | 7.8 | 3.7 | 4.8 |
| $3 - 2\ \mu m$ | 12.8 | 11.3 | 13.3 | 9.8 |
| $2 - 1\ \mu m$ | 13.1 | 19.7 | 28.8 | 26.9 |
| $1 - 0.8\ \mu m$ | 3.9 | 3.6 | 5.8 | 8.5 |
| $0.8 - 0.7\ \mu m$ | 2.2 | 1.6 | 2.4 | 4.4 |
| $0.7\ \mu m \geq$ | 15.9 | 16 | 21.5 | 30.9 |

5

TABLE 2

| | | Blending Proportion of Talc % | Tensile Property in the MD | | Elongation % | Tensile Property in the TD | | Elongation | DuPont Impact Strength reduced to 300g (measured with a 3/8" (×2.54 cm) striker) H50 cm |
|---|---|---|---|---|---|---|---|---|---|
| | | | Strength kg/cm² | Resilience kg/cm² | | Strength kg/cm² | Resilience kg/cm² | | |
| Example | 10 85.7 % (talc 1) | 5 | 560 | 15300 | > 100 | 541 | 14300 | > 100 | > 200 |
| | | 10 | 571 | 17800 | > 100 | 548 | 16600 | > 100 | 190 |
| | | 20 | 574 | 21900 | 28 | 550 | 19300 | 24 | 68 |
| | | 30 | 583 | 26700 | 16 | 551 | 24700 | 13 | 28 |
| | 10 90.4 % (talc 2) | 5 | 567 | 15400 | > 100 | 533 | 14200 | > 100 | > 200 |
| | | 10 | 579 | 18100 | > 100 | 544 | 16700 | > 100 | > 200 |
| | | 20 | 581 | 21200 | 37 | 546 | 19500 | 35 | 98 |
| | | 30 | 580 | 26300 | 20 | 545 | 24200 | 21 | 56 |
| | 10 95.2 % (talc 3) | 5 | 569 | 15000 | > 100 | 541 | 14100 | > 100 | > 200 |
| | | 10 | 576 | 17700 | > 100 | 552 | 16600 | > 100 | > 200 |
| | | 20 | 579 | 22700 | 40 | 554 | 20100 | 40 | 142 |
| | | 30 | 578 | 26100 | 25 | 549 | 24900 | 26 | 67 |
| Comparative Example | P V C | 0 | 542 | 11500 | > 100 | 534 | 10500 | > 100 | > 200 |
| | 10 74.7 % (original) | 5 | 545 | 14800 | 98 | 518 | 13900 | 86 | 90 |
| | | 10 | 557 | 17400 | 94 | 529 | 16400 | 82 | 69 |
| | | 20 | 574 | 20900 | 14 | 545 | 19600 | 13 | 39 |
| | | 30 | 568 | 25800 | 5 | 540 | 24300 | 4 | 17 |

### Examples 2—9, Comparative Examples 2—9

The lead-blended compound (hereinafter referred to as the base compound) was prepared using a Supermixer heated to 110°C by mixing 100 parts of polyvinyl chloride (Kanevinyl® S—1001), 3.0 parts of tribasic lead sulfate, 1.5 parts of dibasic lead stearate, 0.5 parts of lead stearate, 0.5 parts of calcium stearate, and 2.0 parts of PA—20 (produced by Kanegafuchi Chemical Industry Co., Ltd.). PA—20 is a processing aid consisting of polymethylmethacrylate.

Compound specimens composed of 79 parts of the base compound, 20 parts of talc (2) of Example 1 and 1 part of the following polyamides were prepared.

| | | |
|---|---|---|
| Amilan® CM—8000 (Toray) | m.p. 123°C | ... Ex.2 |
| Versalon® 1200 (Nihon General Mills) | s.p. 200°C | ... Ex.3 |
| Versalon® 1164 (Nihon General Mills) | s.p. 160°C | ... Ex.4 |
| Versalon® 1117 (Nihon General Mills) | s.p. 117°C | ... Ex.5 |
| Versalon® 1300 (Nihon General Mills) | s.p. 95°C | ... Ex.6 |
| Milvex® 1000 (Nihon General Mills) | s.p. 135°C | ... Ex.7 |
| Milvex® 1235 (Nihon General Mills) | s.p. 200°C | ... Ex.8 |
| Amilan® CM—8000 AA[20]* | m.p. ca. 120°C | ... Ex.9 |

\* Acrylic acid-grafted Amilan® product, prepared by adding ammonium cerium (IV) sulfate to a solution mixture containing CM—8000 powder, $2N\ H_2SO_4$, and 20 parts of acrylic acid. s.p. means softening point.

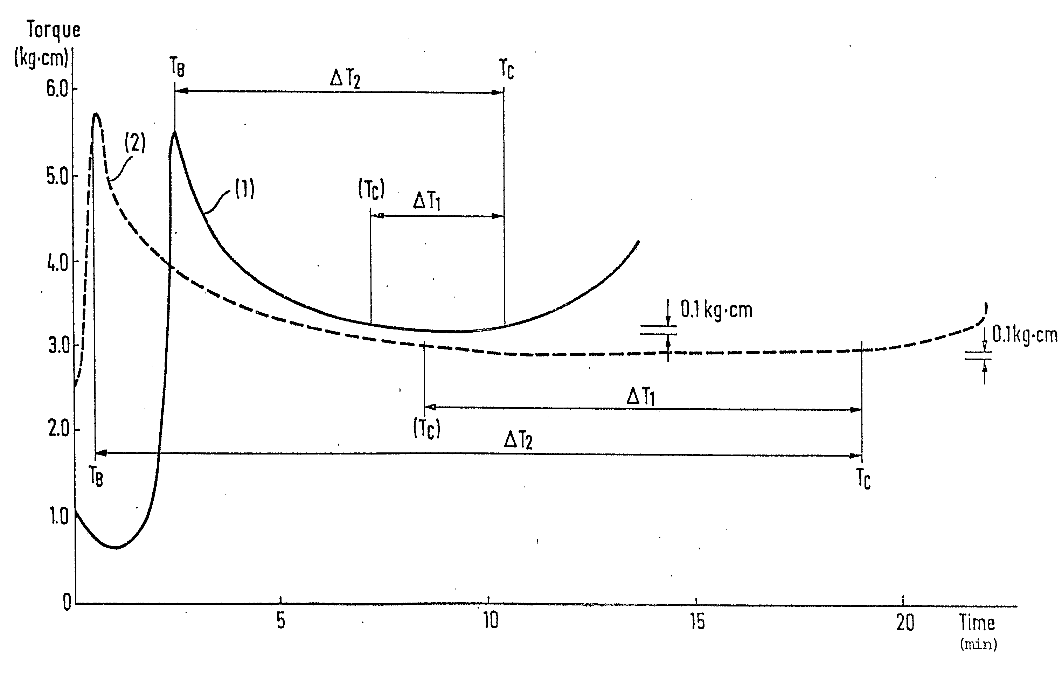

The thermal stability was measured by means of a kneader-type plastograph (manufactured by Brabender Co., Ltd.). Fig. 1 shows a typical plastograph, and Table 3 shows the maximum torque ($M_B$), the retaining time of the steady torque ($\Delta T_1$), and the time from the appearance of the maximum torque to the start of decomposition ($\Delta T_2$).

The plastograph measurement was carried out as follows: capacity of the chamber, 55 ml; temperature, 190°C; amount of the tested specimen, 72 g; pre-heating time, 4 minutes; rotor revolution, 40 rpm.

In determining $\Delta T_1$ and $\Delta T_2$ in Fig. 1, (Tc) and Tc are first ascertained; these points are fixed on the curve of the plastograph 0.1 kg-m higher than the minimum torque. When $T_B$ is taken to be the time of the maximum torque appearance, then $\Delta T_1$ is equal to (Tc—(TC)), and $\Delta T_2$ is equal to (Tc—$T_B$).

In order to compare the effects of the foregoing polyamides with those of the following substances, comparative examples were carried out as to the following compounds.

| | |
|---|---|
| Base compound | ... Comp. Ex. 2 |
| 80 parts base compound + 20 parts talc (2) | ... Comp. Ex. 3 |
| 79 parts base compound + 20 parts talc (2) + 1 part tribasic lead sulfate | ... Comp. Ex. 4 |
| 79 parts base compound + 20 parts talc (2) + 1 part dibutyl tin maleate | ... Comp. Ex. 5 |
| 79 parts base compound + 20 parts talc (2) + 1 part urea | ... Comp. Ex. 6 |
| 79 parts base compound + 20 parts talc (2) + 1 part dicyandiamide | ... Comp. Ex. 7 |
| 79 parts base compound + 20 parts talc (2) + 1 part melamine | ... Comp. Ex. 8 |
| 79 parts base compound + 20 parts talc (2) + 1 part nylon 6,6 | ... Comp. Ex. 9 |

TABLE 3

| | $M_B$ (kg—m) | $\Delta T_1$ (min) | $\Delta T_2$ (min) |
|---|---|---|---|
| Example 2 | 5.7 | 10.5 | 18.5 |
| ,, 3 | 5.2 | 7.7 | 13.8 |
| ,, 4 | 6.6 | 7.0 | 13.6 |
| ,, 5 | 5.6 | 6.0 | 11.5 |
| ,, 6 | 6.1 | 8.3 | 14.4 |
| ,, 7 | 6.5 | 9.5 | 16.6 |
| ,, 8 | 4.6 | 8.3 | 15.1 |
| ,, 9 | 5.3 | 10.0 | 22.7 |
| Comparative Example 2 | 6.2 | 22.7 | 29.8 |
| ,, 3 | 5.5 | 3.2 | 7.9 |
| ,, 4 | 5.4 | 3.5 | 8.1 |
| ,, 5 | 4.9 | 4.5 | 7.6 |
| ,, 6 | 5.1 | 1.4 | 2.8 |
| ,, 7 | 5.5 | 4.5 | 4.0 |
| ,, 8 | 6.0 | 5.2 | 9.2 |
| ,, 9 | 5.0 | 4.2 | 8.1 |

When Comparative Example 2 is compared with Comparative Example 3 as to $\Delta T_1$ and $\Delta T_2$, the thermal stability of the base compound proves to be improved by approximately 1/9 in $\Delta T_1$ and approximately 1/4 in $\Delta T_2$ by adding the talc of this invention. However, neither tribasic lead sulfate nor dibutyl tin maleate has any significant effect in further improving the thermal stability (see Comparative Examples 4 and 5). Urea, dicyandiamide or melamine, which are said to be effective in improving the thermal stability of the asbestos-polyvinyl chloride compositions, also have virtually no effect in this case; moreover, in some specimens the result is negative. From this it is apparent that none of the conventional additives are useful in improving the thermal stability (see Comparative Examples 6 and 8), whereas the polyamide of this invention can improve it from 2.2 to 2.7 times in $\Delta T_1$ and from 1.7 to 2.9 times in $\Delta T_2$ (see Examples 2 to 9).

Since Nylon 6,6 has a higher melting point than that specified in this invention, it of course has no effect. This shows that it is necessary to use polyamides with a softening or melting point not higher than 200°C.

Examples 10—15

The base compound, talc (2) and Amilan® CM—8000 used in Example 2 were mixed in the following proportions and the thermal stability of each specimen was evaluated by means of the plastograph apparatus. The results are shown in Table 4.

**0 012 990**

| Base compound (parts) | | Talc (parts) | | Amilan® CM—8000 (parts) | |
|---|---|---|---|---|---|
| 79.9 | + | 20 | + | 0.1 | Ex. 10 |
| 79.7 | + | 20 | + | 0.2 | Ex. 11 |
| 79.5 | + | 20 | + | 0.5 | Ex. 12 |
| 79.0 | + | 20 | + | 1.0 | Ex. 13 |
| 78.0 | + | 20 | + | 2.0 | Ex. 14 |
| 75.0 | + | 20 | + | 5.0 | Ex. 15 |

TABLE 4

| | $M_B$ (kg—m) | $\Delta T_1$ (min) | $\Delta T_2$ (min) |
|---|---|---|---|
| Example 10 | 5.5 | 9.5 | 15.9 |
| ,, 11 | 5.5 | 12.5 | 19.3 |
| ,, 12 | 6.5 | 12.4 | 19.0 |
| ,, 13 | 5.7 | 10.5 | 18.5 |
| ,, 14 | 6.0 | 8.0 | 16.6 |
| ,, 15 | 7.4 | 4.5 | 11.9 |
| Comparative Example 3 | 5.5 | 3.2 | 7.9 |

The ratio of Amilan® CM—8000 to the talc was 0.5, 1.0, 2.5, 5.0, 10.0, and 25.0 percent by weight, respectively. The thermal stability was very much improved by adding only 0.5 percent by weight of Amilan® CM—8000 (based upon the weight of the talc) to the polyvinyl chloride composition. The thermal stability attains a maximum between 1.5 and 2.5 percent by weight of Amilan® CM—8000 and gradually decreases, yet the stabilized property is still higher in the specimen containing 25 percent by weight Amilan than in the specimen of Comparative Example 3. The maximum torque, however, remains constant or even tends to decrease when the polyamide of this invention is added. From this, the improvement in the thermal stability seems to be substantially unaffected by the lubricity to be increased by adding the polyamide.

Examples 16—19, Comparative Examples 10—13

To investigate the quantitative effect of the talc on the thermal stability of the polyvinyl chloride composition, the following compositions, in which the ratio of Amilan® CM—8000 to the talc was 2.5 percent by weight, were subjected to plastography. The result is shown in Table 5.

| Base compound (parts) | Talc (parts) | Amilan® CM—8000 (parts) | |
|---|---|---|---|
| 94.875 | 5 | 0.125 | Ex. 16 |
| 89.750 | 10 | 0.250 | Ex. 17 |
| 84.625 | 15 | 0.325 | Ex. 18 |
| 79.500 | 20 | 0.500 | Ex. 12 |
| 69.250 | 30 | 0.750 | Ex. 19 |
| 95 | 5 | 0 | Comp. Ex. 10 |
| 90 | 10 | 0 | Comp. Ex. 11 |
| 85 | 15 | 0 | Comp. Ex. 12 |
| 70 | 30 | 0 | Comp. Ex. 13 |

TABLE 5

| | $M_B$ (kg—m) | $\Delta T_1$ (min) | $\Delta T_2$ (min) |
|---|---|---|---|
| Example 16 | 5.3 | 17.5 | 23.6 |
| ,, 17 | 5.4 | 22.0 | 28 |
| ,, 18 | 6.0 | 16.0 | 23.4 |
| ,, 12 | 6.5 | 12.4 | 19.0 |
| ,, 19 | 5.9 | 7.5 | 13.9 |
| Comparative Example 2 | 6.2 | 22.7 | 29.8 |
| ,, 10 | 5.4 | 7.7 | 13.2 |
| ,, 11 | 4.9 | 7.3 | 11.9 |
| ,, 12 | 4.8 | 5.8 | 9.6 |
| ,, 3 | 5.5 | 3.2 | 7.9 |
| ,, 13 | 5.3 | 2.4 | 5.1 |

When the talc is added to the base compound at only 5 percent by weight, $\Delta T_1$ and $\Delta T_2$ are very much lowered and this trend continues until the amount of talc reaches 30 percent by weight. However, the thermal stability expressed in terms of $\Delta T_1$ and $\Delta T_2$ is remarkably improved by adding a polyamide of this invention to the talc-blended compound. The polyamide effect proves to be clearly present when the talc is incorporated in an amount as great as 30 percent by weight, but it is at its most remarkable when the amount of talc is below 10 percent by weight. The thermal stability of the talc-blended polyvinyl chloride is improved to almost the same point as that of the base compound.

**0 012 990**

Examples 20—31, Comparative Examples 14—19

The mixtures composed of 79 parts of the base compound in Example 2, 20 parts of the talc (2) in Example 1, and 1 part of the following amide compounds were blended with a mixer for 20, 30 and 40 minutes. To evaluate the thermal stability of the polyvinyl chloride compound, $\Delta T_1$ and $\Delta T_2$ were determined in the same way as described in Example 2. The polyvinyl chloride compositions were shaped into a belt as in Example 1, and the impact strength indicated as height (cm) of a half specimen's break was measured by means of the DuPont Impact Tester.

Amide Compounds Incorporated

Methylolated stearamide:   $CH_3(CH_2)_{16}CONH \cdot CH_2OH$

20 min. mixing ... Ex. 20

30 min. mixing ... Ex. 21

40 min. mixing ... Ex. 22

Methylene bis-stearamide:   $CH_2(—NHCO\ C_{17}H_{35})_2$

20 min. mixing ... Ex. 23

30 min. mixing ... Ex. 24

40 min. mixing ... Ex. 25

Ethylene bis-stearamide:   $(—NHCO\ C_{17}H_{35})CH_2 \cdot CH_2(—NHCO\ C_{17}H_{35})$

20 min. mixing ... Ex. 26

30 min. mixing ... Ex. 27

40 min. mixing ... Ex. 28

Ethylene bis-oleamide:   $(—NHCO\ C_{17}H_{35})CH_2 \cdot CH_2(—NHCO\ C_{17}H_{33})$

20 min. mixing ... Ex. 29

30 min. mixing ... Ex. 30

40 min. mixing ... Ex. 31

For comparison purposes the following compositions without the amide compound were prepared by varying the mixing time or adding 1 part of tribasic lead sulfate.

| Base Compound (parts) | Talc (parts) | Tribasic Lead Sulfate (parts) | Mixing Time (min.) |
|---|---|---|---|
| 80 | 20 | 0 | 20 ... Comp. Ex. 14 |
| 80 | 20 | 0 | 30 ... Comp. Ex. 15 |
| 80 | 20 | 0 | 40 ... Comp. Ex. 16 |
| 79 | 20 | 1.0 | 20 ... Comp. Ex. 17 |
| 79 | 20 | 1.0 | 30 ... Comp. Ex. 18 |
| 79 | 20 | 1.0 | 40 ... Comp. Ex. 19 |

11

In Comparative Examples 14 to 19, $\Delta T_1$, $\Delta T_2$, and the DuPont impact strength rapidly decrease as the mixing time is prolonged. When the mixing time is as much as 40 minutes, both specimens of Comparative Examples 16 and 19 are stained black, and this is shown to result from the polyvinyl chloride degradation. On the other hand, when the amide compound is added according to this invention, the impact strength is increased much more in the 30-minute mixed specimens than in the 20-minute mixed ones, and retained after 40 minutes mixing.

TABLE 6

| | $\Delta T_1$ (min) | $\Delta T_2$ (min) | DuPont (cm) |
|---|---|---|---|
| Example 20 | 7.8 | 11.7 | 112 |
| ,, 21 | 7.7 | 11.5 | 134 |
| ,, 22 | 7.7 | 11.3 | 103 |
| ,, 23 | 9.2 | 13.8 | 108 |
| ,, 24 | 9.2 | 13.7 | 127 |
| ,, 25 | 9.0 | 13.9 | 111 |
| Example 26 | 9.8 | 14.6 | 122 |
| ,, 27 | 10.1 | 13.9 | 141 |
| ,, 28 | 9.7 | 13.7 | 120 |
| ,, 29 | 12.5 | 18.0 | 118 |
| ,, 30 | 11.7 | 18.5 | 136 |
| ,, 31 | 11.3 | 17.6 | 115 |
| Comparative Example 14 | 3.2 | 7.9 | 98 |
| ,, 15 | 2.2 | 5.7 | 54 |
| ,, 16 | 1.3 | 3.2 | 35 |
| ,, 17 | 3.5 | 8.1 | 97 |
| ,, 18 | 2.1 | 5.6 | 52 |
| ,, 19 | 1.3 | 3.3 | 33 |

The retention of $\Delta T_1$ and $\Delta T_2$, as well as unstaining of the compound, can be considered such that the decomposition of polyvinyl chloride which is accelerated by the talc is prevented owing to the presence of the amide. Thus this effect seems to be due to the fact that the $R^2$ in the amide compound contains e.g. a methylol group ($-CH_2OH$) or the group $-CH_2NHCOR_1$ or $-CH_2CH_2NHCOR_1$.

The fact that the impact strength has a peak at 30 minutes in mixing may be due to an offset effect such that the decomposition of the vinyl chloride polymer and the talc dispersion, increased in the course of mixing as a negative and a positive effect respectively, may be cancelled out, in other words neutralize each other after about 30 minutes after the start of mixing. However, in the case of the Comparative Examples, in which the corresponding peak of the impact strength appears at 20 minutes, the decomposition of the vinyl chloride polymer may no longer be prevented, while the dispersion of the talc may still be inadequate at about 20 minutes, with the result that the impact strength begins to fall.

12

Examples 32—46

With the base compound in Example 2, the talc (2) in Example 1, ethylene bis-stearamide (EBS) in Example 26, and Amilan® CM—8000 in Example 2, the following compositions were prepared by varying the mixing time. As for the compositions prepared, $\Delta T_1$, $\Delta T_2$ and the DuPont impact strength were evaluated in the same manner as described in Example 20. The result is shown in Table 7.

| Base Compound | Talc | EBS | Mixing Time | |
|---|---|---|---|---|
| (parts) | (parts) | (parts) | (min.) | |
| 79.9 | 20 | 0.1 | 20 | ... Ex. 32 |
| 79.9 | 20 | 0.1 | 30 | ... Ex. 33 |
| 79.9 | 20 | 0.1 | 40 | ... Ex. 34 |
| 79.7 | 20 | 0.3 | 20 | ... Ex. 35 |
| 79.7 | 20 | 0.3 | 30 | ... Ex. 36 |
| 79.7 | 20 | 0.3 | 40 | ... Ex. 37 |
| 79.5 | 20 | 0.5 | 20 | ... Ex. 38 |
| 79.5 | 20 | 0.5 | 30 | ... Ex. 39 |
| 79.5 | 20 | 0.5 | 40 | ... Ex. 40 |
| 78.0 | 20 | 2.0 | 20 | ... Ex. 41 |
| 78.0 | 20 | 2.0 | 30 | ... Ex. 42 |
| 78.0 | 20 | 2.0 | 40 | ... Ex. 43 |

| Base Compound | Talc | Amilan® CM—8000 | EBS | Mixing Time | |
|---|---|---|---|---|---|
| (parts) | (parts) | (part) | (parts) | (min.) | |
| 79.4 | 20 | 0.1 | 0.5 | 20 | ... Ex. 44 |
| 79.4 | 20 | 0.1 | 0.5 | 30 | ... Ex. 45 |
| 79.4 | 20 | 0.1 | 0.5 | 40 | ... Ex. 46 |

The DuPont impact strength, $\Delta T_1$ and $\Delta T_2$, are prevented from decreasing by the addition of only 0.1 part of EBS (0.5 part based on the weight of the talc). The DuPont impact strength becomes reduced due to the over-lubricity of the composition and insufficient gelation when the EBS content reaches 2.0 parts. However, the mixing time is not found to have any influence anywhere, so that the effect of EBS seems to be present. Since the amide compound of this invention ($R_1CONHR_2$) has lubricity, the lubricity of the compositions has to be decreased to prevent them from becoming over-lubricated by lowering the amount of other lubricating agent when the amide is added.

Amilan® CM—8000, i.e. a polyamide to be used according to this invention, and EBS display the favourable effect in combination; they prevent a decrease of the DuPont impact strength and increase $\Delta T_1$ and $\Delta T_2$ without being affected by prolongation of the mixing time. In this case, the thermal stability is improved without altering the degree of gelation of the compositions.

TABLE 7

| Example No. | EBS | Mixing Time | $\Delta T_1$ | $\Delta T_2$ | DuPont Impact Strength |
|---|---|---|---|---|---|
| | (parts) | (min.) | | | |
| 32 | 0.1 | 20 | 5.8 | 11.0 | 116 |
| 33 | 0.1 | 30 | 5.6 | 10.2 | 121 |
| 34 | 0.1 | 40 | 5.0 | 9.3 | 96 |
| 35 | 0.3 | 20 | 6.0 | 11.0 | 123 |
| 36 | 0.3 | 30 | 5.7 | 10.6 | 125 |
| 37 | 0.3 | 40 | 5.4 | 10.3 | 109 |
| 38 | 0.5 | 20 | 7.3 | 11.3 | 120 |
| 39 | 0.5 | 30 | 7.2 | 11.1 | 137 |
| 40 | 0.5 | 40 | 7.0 | 10.9 | 121 |
| 26 | 1.0 | 20 | 9.8 | 14.6 | 122 |
| 27 | 1.0 | 30 | 10.1 | 13.9 | 141 |
| 28 | 1.0 | 40 | 9.7 | 13.7 | 120 |
| 41 | 2.0 | 20 | 11.8 | 15.8 | 78 |
| 42 | 2.0 | 30 | 12.0 | 14.9 | 79 |
| 43 | 2.0 | 40 | 11.7 | 15.6 | 78 |
| 44 | 1.0 CM—8000 + 0.5 | 20 | 12.5 | 19.3 | 129 |
| 45 | " | 30 | 12.6 | 19.7 | 148 |
| 46 | " | 40 | 12.4 | 19.4 | 127 |

Brief Explanation of the Drawing

Fig. 1 shows the plastograph representing the results of Example 2 and Comparative Example 3, in which the value of the torque is plotted on the ordinate and the time is plotted on the abscissa.

$\Delta T_1$ and $\Delta T_2$ are given respectively for the curves drawn with the solid line (Comparative Example 3) and the dotted line (Example 2).

**Claims**

1. Moulding compositions on the basis of vinyl chloride polymers comprising the vinyl chloride polymer and talc, characterized in that at least 85 percent by weight of said talc has a particle size of not more than 10 $\mu$m and said composition contains from 0.1 to 30 parts by weight of an amide compound and/or a polyamide having a softening point or a melting point of not higher than 200°C per 100 parts by weight of said talc, and optionally other additives.

2. Moulding compositions as in Claim 1, wherein said talc comprises 5 to 40 parts per 100 parts of the total composition containing polyvinyl chloride, talc, amide and/or polyamide and optionally other additives.

3. Moulding compositions as in Claim 1, wherein said total composition comprises from 0.5 to 20 parts by weight of said amide per 100 parts by weight of said talc used.

14.

**0 012 990**

4. Moulding compositions as in Claim 1, wherein said total composition comprises from 0.1 to 25 parts by weight of said polyamide per 100 parts by weight of said talc used.

5. Moulding compositions as in Claim 1, wherein said amide compound has the general formula $R^1CONHR^2$, where $R^1$ is an aliphatic hydrocarbon residue containing 10 to 40 carbon atoms and $R^2$ is a methylol group or a group of the general formula $(CH_2)_nNHCOR^3$ where $R^3$ is an aliphatic hydrocarbon group containing from 10 to 40 carbon atoms and n is an integer of from 1 to 10.

6. The use of the moulding compositions according to claims 1 to 5 for preparing shaped articles.

## Revendications

1. Compositions de moulage à base de polymères de chlorure de vinyle comprenant le polymère de chlorure de vinyle et du talc, caractérisé en ce que le talc à raison d'au moins 85% en poids a une taille des particules qui n'est pas supérieure à 10 microns, et en ce que une telle composition contient, pour 100 parties en poids du talc, environ 0,1 à 30 parties en poids d'un composé d'amide et/ou d'un polyamide ayant un point de ramollissement ou un point de fusion ne dépassant pas 200°C, et éventuellement d'autres additifs.

2. Compositions de moulage suivant la revendication 1, dans lesquelles le talc constitue de 5 à 40 parties sur 100 parties de la composition totale comprenant le chlorure de polyvinyle, le talc, l'amide et/ou le polyamide et les autres additifs éventuels.

3. Compositions de moulage suivant la revendication 1, dans lesquelles la composition totale comprend 0,5 à 20 parties en poids de l'amide pour 100 parties en poids du talc utilisé.

4. Compositions de moulage suivant la revendication 1, dans lesquelles la composition totale comprend de 0,1 à 25 parties en poids du polyamide pour 100 parties en poids du talc utilisé.

5. Compositions de moulage suivant la revendication 1, dans lesquelles le composé d'amide répond à la formule générale $R^1CONHR^2$, dans laquelle $R^1$ représente un reste hydrocarburé aliphatique comportant de 10 à 40 atomes de carbone et $R^2$ est un groupement de méthylol ou un groupement de la formule générale $(CH_2)_nNHCOR^3$, dans laquelle $R^3$ représente un groupement hydrocarburé aliphatique comportant de 10 à 40 atomes de carbone et n est un nombre entier ayant une valeur de 1 à 10.

6. L' utilisation des compositions de moulage suivant les revendications 1 à 5 dans la préparation d'objets façonnés.

## Patentansprüche

1. Formmassen auf der Basis von Vinylchlorid-Polymerisaten, enthaltend das Vinylchlorid-Polymerisat und Talkum, dadurch gekennzeichnet, daß mindestens 85 Gewichtsprozent des Talkums eine Korngröße von nicht mehr als 10 $\mu$m aufweist und die Formmasse 0,1 bis 30 Gewichtsteile einer Amidverbindung und/oder eines Polyamids mit einem Erweichungspunkt oder einem Schmelzpunkt von höchstens 200°C pro 100 Gewichtsteile Talkum enthält, und gegebenenfalls anderen Zusatzstoffen.

2. Formmassen nach Anspruch 1, dadurch gekennzeichnet, daß der Anteil des Talkums 5 bis 40 Teile pro 100 Teile der Polyvinylchlorid, Talkum, Amid und/oder Polyamid und gegebenenfalls andere Zusatzstoffe enthaltenden Formmasse beträgt.

3. Formmassen nach Anspruch 1, dadurch gekennzeichnet, daß die Formmasse 0,5 bis 20 Gewichtsteile Amid pro 100 Gewichtsteile Talkum enthält.

4. Formmassen nach Anspruch 1, dadurch gekennzeichnet, daß die Formmasse 0,1 bis 25 Gewichtsteile Polyamid pro 100 Gewichtsteile Talkum enthält.

5. Formmassen nach Anspruch 1, dadurch gekennzeichnet, daß das Amid die allgemeine Formel $R^1CONHR^2$ hat, in der $R^1$ ein aliphatischer Kohlenwasserstoffrest mit 10 bis 40 Kohlenstoffatomen und $R^2$ eine Methylolgruppe oder eine Gruppe der allgemeinen Formel $(CH_2)_nNHCOR^3$ ist, in der $R^3$ ein aliphatischer Kohlenwasserstoffrest mit 10 bis 40 Kohlenstoffatomen ist und n eine ganze Zahl mit einem Wert von 1 bis 10 ist.

6. Verwendung der Formmassen nach Anspruch 1 bis 5 zur Herstellung von Formteilen.

**0 012 990**